(19) **Europäisches Patentamt**

**European Patent Office**

**Office européen des brevets**

(11) **EP 1 252 205 B1**

(12) **FASCICULE DE BREVET EUROPEEN**

(45) Date de publication et mention
de la délivrance du brevet:
**02.03.2005 Bulletin 2005/09**

(21) Numéro de dépôt: **00988537.7**

(22) Date de dépôt: **29.12.2000**

(51) Int Cl.[7]: **C08F 214/22**

(86) Numéro de dépôt international:
**PCT/CA2000/001585**

(87) Numéro de publication internationale:
**WO 2001/049757 (12.07.2001 Gazette 2001/28)**

(54) **ELASTOMERES FLUOROSULFONES A FAIBLE TG A BASE DE FLUORURE DE VINYLIDENE**

FLUOROSULFONEELASTOMERE MIT NIEDRIGEM TG BASIEREND AUF VINYLIDENFLUORIT

FLUOROSULPHONATED ELASTOMERS WITH LOW GLASS TRANSITION BASED OF VINYLIDENE FLUORIDE

(84) Etats contractants désignés:
**AT BE CH CY DE DK ES FI FR GB GR IE IT LI LU MC NL PT SE TR**

(30) Priorité: **29.12.1999 CA 2293846**
**24.02.2000 CA 2299622**

(43) Date de publication de la demande:
**30.10.2002 Bulletin 2002/44**

(73) Titulaire: **Hydro-Québec**
**Montréal, Québec H2Z 1A4 (CA)**

(72) Inventeurs:
• **AMEDURI, Bruno, Michel**
**F-34090 Montpellier (FR)**

• **ARMAND, Michel**
**Montréal, Québec H3T 1N2 (CA)**
• **BOUCHER, Mario**
**St-Etienne-des-Grès, Québec G0X 2P0 (CA)**
• **MANSERI, Abdellatif**
**F-34080 Montpellier (FR)**

(74) Mandataire: **Guerre, Dominique**
**Cabinet Germain et Maureau,**
**12, rue Boileau,**
**BP 6153**
**69466 Lyon Cedex 06 (FR)**

(56) Documents cités:
**WO-A-00/52060**          **WO-A-99/41292**
**WO-A-99/45048**

## Description

### DOMAINE DE L'INVENTION

La présente invention concerne la synthèse de nouveaux élastomères fluorés possédant de très basses températures de transition vitreuse ($T_g$), une bonne résistance aux acides, au pétrole et aux carburants, de même que de bonnes propriétés de mise en oeuvre. Les élastomères de l'invention contiennent, à titre d'exemple de 60 à 80 % en moles de fluorure de vinylidène (ci-après "VDF") et de 20 à 40 % en moles de perfluoro(4-méthyl-3,6-dioxaoct-7-ène) fluorure de sulfonyle (ci-après "$PFSO_2F$"). La présente invention concerne aussi la préparation de ces élastomères par copolymérisation radicalaire des comonomères en présence de différents amorceurs organiques conventionnels, tels que les peroxydes, les peresters, les diazoïques ou les peroxypivalates d'alkyle.

### ART ANTÉRIEUR

Les élastomères fluorés présentent une combinaison unique de propriétés extrêmement avantageuses. Parmi celles-ci, on peut citer leur résistance thermique, à l'oxydation, aux rayons ultraviolets (UV), à la dégradation due au vieillissement, aux agents chimiques corrosifs et aux carburants. Ils possèdent en outre de faibles tensions de surface, constantes diélectriques et indices de réfraction. Par ailleurs, ils résistent à l'absorption d'eau. Toutes ces propriétés en font des matériaux de choix dans diverses applications de hautes technologies telles que les composantes de piles à combustible, les joints d'étanchéité dans le domaine de l'aéronautique, les semi-conducteurs dans la microélectronique, les durites, tuyaux, corps de pompes et diaphragmes dans les industries chimique, automobile et pétrolière.

Cependant, les élastomères à base de fluorure de vinylidène (VDF ou $VF_2$) sont peu nombreux. Même si les élastomères commerciaux tels que les Kel F® (VDF / chlorotrifluoroéthylène), Fluorel®, Dai-El®, FKM®, Technoflon®, Viton®A ou Viton®B (VDF / HFP ou VDF / HFP / TFE) présentent de bonnes résistances chimique et thermique, leurs températures de transition vitreuse ($T_g$) ne sont pas assez basses. Les $T_g$ des produits commerciaux précités varient généralement entre -10 et -25 °C. La plus faible valeur trouvée dans la littérature est celle du Viton®B, soit une $T_g$ de -26 °C, ce qui est surprenant puisque le fabricant annonce une $T_g$ variant entre -5 et -15 °C pour ce produit. Pour concurrencer ces élastomères, la compagnie Ausimont a proposé un copolymère VDF / pentafluoropropène (Technoflon®) résistant aux flammes et à l'oxydation, mais n'ayant pas de $T_g$ inférieure à -26 °C et dont le comonomère est difficile d'accès.

DuPont a suggéré une nouvelle génération d'élastomères à base de perfluoroalkyl vinyl éther (PAVE) résistants à basses températures. Ainsi, des copolymères ont été produits, tels que le copolymère de tétrafluoroéthylène (TFE) / perfluorométhyl vinyl éther (PMVE) (Kalrez®), dont les $T_g$ ne descendent pas en deçà de -15 °C, les TFE / PMVE décrits dans EP 0 077 998, dont les $T_g$ sont de -9 °C, ou TFE / perfluoroalkylvinyléther (PAVE) décrits dans US 4.948.853. Mais ce sont surtout les terpolymères qui présentent des $T_g$ encore plus basses. Parmi eux, on note le terpolymère TFE / éthylène /PMVE dont la $T_g$ est de -17 °C, ou le terpolymère TFE / VDF / PAVE (décrit dans EP 0 131 308), et surtout le terpolymère TFE / VDF / PMVE (Viton GLT®) dont la $T_g$ est de -33 °C.

Cependant, la $T_g$ augmente avec le pourcentage de TFE dans le polymère, conduisant à de moins bonnes propriétés de mise en oeuvre. Ceci a aussi été remarqué dans EP 0 131 308 qui décrit la synthèse de TFE / PAVE /VDF, même si les élastomères, qui sont utilisés comme joints toriques, présentent de très bonnes résistances aux solvants polaires (voir également EP 0 618 241, JP-A-3066714 Chem. Abstr., 115:73436 z).

La terpolymérisation du TFE avec le PMVE et le $F_2C=CF[OCF_2CF(CF_3)]_nOC_3F_7$ (*Polym. J.,* <u>1985</u>, <u>17</u>, 253) a conduit à des élastomères dont les $T_g$ (de -9 à -76 °C) dépendent de la valeur du nombre n de motifs HFPO et du pourcentage des deux comonomères oxygénés.

Enfin, DuPont a produit des membranes Nafion® par copolymérisation du TFE avec $F_2C=CFOCF_2CF(CF_3)OC_2F_4SO_2F$ (ou $PFSO_2F$). Par ailleurs, Asahi Glass utilise ce même monomère sulfoné pour la fabrication des membranes Flemion®. D'autres monomères de même fonctionnalité, par exemple le $F_2C=CFOCF_2CF(CF_3)OC_3F_6SO_2F$ (pour les membranes Aciplex®, Asahi Chemical), ou le $CF_2=CFOC_2F_4SO_2F$, ou de fonctionnalité carboxylate le $F_2C=CFO[CF_2CF(CF_3)O]_xC_2F_4CO_2CH_3$ (pour les membranes Nafion® ou Aciplex® lorsque x vaut 1 et pour les membranes Flemion® si x vaut 0) sont aussi utilisées.

Par ailleurs, il est aussi connu qu'un autre composé fluoré, le fluorure de vinylidène (VDF) donne des copolymères intéressants du point de vue commercial.

Dans "Development of Vulcanizable Elastomers Suitable for Use in Contact with Liquid Oxygen" (Third Annual Summary Report ; Contract no. NAS8-5352 ; George C. Marshall Space Flight Center, NASA ; Peninsular ChemReasearch Inc. ; June 8, 1966 ; p. 33), P.D. Schuman et E.C. Strump décrivent la copolymérisation du VDF avec un perfluoroalkyl vinyl éther de formule $F_2C=CFOR_F$ ($R_F=CF_3$, $C_2F_5$ et $C_3F_7$) amorcée par l'azobisisobutyronitrile (AIBN) à de très hautes pressions (environ 1 000 atm) laquelle conduit à des élastomères fluorés ayant une $T_g$ de -20 à -25 °C (pour un élastomère contenant 43 % de $F_2C=CFOC_2F_5$) et une $T_g$ de -31 °C (avec 31 % de $F_2C=CFOC_3F_7$

dans le copolymère). Le procédé menant à l'obtention du copolymère est cependant difficile à mettre en oeuvre et dangereux en raison des très hautes pressions requises.

Aussi, US 4.418.186 décrit la copolymérisation en émulsion du VDF avec l'éther perfluorovinylique $F_2C=CFOR_F$ où $R_F$ représente le groupement $CF_2CF(CF_3)OC_3F_7$, qui produit des élastomères ayant une $T_g$ variant entre -29 et -36 °C. Le fait d'introduire un second pont éther améliore la souplesse du copolymère et fait chuter la valeur de la $T_g$.

De plus, EP 0 077 998 décrit la copolymérisation en solution (dans le $ClCF_2CFCl_2$) du VDF avec l'éther perfluorovinylique $F_2C=CF(OCF_2CF(CF_3))_2OC_3F_7$ amorcée par un perester chlorofluoré. La $T_g$ du produit final est de -41 °C. Le solvant de polymérisation utilisé (CFC) et l'amorceur coûteux et dangereux à manipuler, constituent deux limitations significatives.

## DIVULGATION DE L'INVENTION

L'invention a donc pour objet de développer de nouveaux élastomères ayant une température de transition vitreuse ($T_g$) très basse et obtenus à partir de comonomères peu dispendieux, par exemple le VDF.

L'invention a aussi pour objet la préparation de ces élastomères par un procédé simple ne nécessitant pas de conditions expérimentales dangereuses.

Un autre objet de l'invention est de connaître de façon très précise et sans ambiguïté la composition des copolymères selon l'invention, c'est-à-dire les pourcentages molaires de chacun des comonomères présents dans les copolymères.

La présente invention concerne des élastomères comprenant un comonomère de fluorure de vinylidène (VDF) et un comonomère de fluorure de perfluorosulfonyle éthoxy propyl vinyl éther (PSEPVE) ou de perfluoro(4-méthyl-3,6-dioxaoct-7-ène) fluorure de sulfonyle (PFSO$_2$F) lesquels élastomères ne contenant ni de tétrafluoroéthylène (TFE), ni d'hexafluoropropène (HFP), ni de monomère porteur de groupement siloxane et présentant de très basses températures de transition vitreuses ($T_g$) se situant entre -30 et -40°C, de préférence entre -32 et -36 °C.

Dans une mise en oeuvre préférentielle, le VDF est majoritaire dans la composition de l'élastomère. Un pourcentage molaire de 60 à 80 % de VDF dans le copolymère est particulièrement préférentiel. Comme second comonomère, un perfluoroalkoxy alkyl vinyl éther sulfoné tel que le perfluoro(4-méthyl-3,6-dioxaoct-7-ène) fluorure de sulfonyle (PFSO$_2$F) représente un composé préférentiel. Le pourcentage molaire de ce second comonomère peut varier entre 20 et 40 % dans le copolymère.

L'invention concerne aussi un procédé de préparation de ces élastomères, caractérisé en ce que la préparation s'effectue par copolymérisation radicalaire en présence d'un amorceur organique à une température comprise entre 20 et 200 °C, pour une période de temps comprise entre 2 et 10 heures, et à une pression initiale comprise entre 2 et 100 bars, et on laisse chuter ladite pression initiale au fur et à mesure que les monomères se consomment.

Les élastomères fluorés selon l'invention peuvent aussi comprendre un ou plusieurs alcènes fluorés dont le choix est laissé à l'homme de l'art.

## DESCRIPTION DÉTAILLÉE DE L'INVENTION

Compte tenu de l'état de la technique, le VDF a été choisi pour la préparation des élastomères de la présente invention, ce dernier étant un alcène moins cher et plus facile à mettre en oeuvre que le TFE. Étant moins coûteux, il peut donc être utilisé en plus grande quantité dans le copolymère, qui pourra comprendre comme second monomère un perfluoroalkoxyalkyl vinyl éther fonctionnel, par exemple avec un carboxylate ou un sulfonate. De tels perfluoroalkoxy alkyl vinyl éther fonctionnels sont intéressants car ils favorisent des sites de réticulation, afin de préparer des élastomères originaux présentant une bonne résistance à basses températures et de bonnes propriétés de mise en oeuvre. Des terpolymères peuvent également être envisagés, dans lesquels le troisième comonomère serait préférentiellement un perfluoroalkyl vinyl éther (PAVE).

La présente invention décrit la synthèse de copolymères élastomères fluorés originaux, à base de fluorure de vinylidène (VDF) et contenant un perfluoroalkyl vinyl éther fonctionnel et/ou un perfluoroalkoxyalkyl vinyl éther fonctionnel. D'autres alcènes fluorés peuvent être éventuellement ajoutés. Parmi les avantages de la présente invention, on note :

- La synthèse des élastomères fluorés est réalisée à partir du VDF au lieu du tétrafluoroéthylène (TFE) traditionnel, ce dernier étant largement utilisé pour la fabrication d'élastomères fluorés. La conséquence directe de cette substitution est un coût réduit pour l'élastomère produit.
- La synthèse des élastomères fluorés dont il est question dans la présente invention ne nécessite pas l'utilisation de monomères porteurs de groupements siloxanes, ces derniers contribuant généralement à une diminution de la $T_g$. Il est bien connu en effet que les siloxanes ont des $T_g$ très basses. Par exemple, les poly(diméthyl siloxane)s ont des $T_g$ de -120 °C comme indiqué d'une manière générale dans l'ouvrage suivant : The Siloxane Bond : Physical Properties and Chemical Transformations, M. G. Voronkov, V. P. Mileshkevich, and Yu. A. Yuzhelevskii, Consultants Bureau, New York (1978).

- Les élastomères fluorés de la présente invention possèdent de très faibles $T_g$ qui, par exemple, varient généralement de -30 à -40°C, ces élastomères pouvant ainsi trouver des applications dans le domaine de la plasturgie comme agent de mise en oeuvre, ou dans d'autres industries de pointe comme l'aérospatiale, l'électronique ou les industries de l'automobile, pétrolière, ou le transport de fluides très froids tels que l'azote liquide, l'oxygène liquide et l'hydrogène liquide. De plus, des joints de haute résistance thermique peuvent être préparés à partir des présents élastomères. Enfin, ces élastomères peuvent être utilisés pour la fabrication de matériaux dans le domaine de l'énergie, par exemple pour la préparation de composantes de piles à combustible telles que les membranes.
- Les élastomères fluorés obtenus par la présente invention sont de composition majoritaire en VDF, donc peu dispendieux.

Le champ de la présente invention s'étend à tous les types de procédés de polymérisation radicalaire généralement utilisés: la polymérisation en émulsion, en miniémulsion, en microémulsion, en masse, en suspension, en microsuspension et en solution. Tous peuvent être employés selon leur mise en oeuvre conventionnelle, mais la polymérisation en solution a été utilisée de manière préférentielle pour des raisons de facilité de mise en oeuvre au laboratoire uniquement, car dans le cas de la polymérisation en solution, les pressions d'opération sont peu élevées, soit de l'ordre de 20 à 40 bars. Dans le cas de la polymérisation en émulsion , en masse et en suspension, la pression d'opération est plus élevée, soit de l'ordre de 40 à 100 bars.

Les divers alcènes fluorés employés comme troisième comonomère présentent de préférence au plus quatre atomes de carbone et ont la structure $R_1R_2C=CR_3R_4$ où les substituants $R_{1-4}$ sont tels qu'au moins un d'entre eux est fluoré ou perfluoré. Ceci englobe donc: le fluorure de vinyle (VF), le trifluoroéthylène, le chlorotrifluoroéthylène (CTFE), le bromotrifluoroéthylène, le 1-hydropentafluoropropylène, l'hexafluoroisobutylène, le 3,3,3-trifluoropropène, le 1,2-dichlorodifluoroéthylène, le 2-chloro-1,1-difluoroéthylène et de façon générale tous les composés vinyliques fluorés ou perfluorés. Par ailleurs, des éthers perfluorovinyliques peuvent aussi jouer le rôle de comonomères. On les utilise de préférence à raison de 3 à 50% en moles. Parmi eux, on peut citer les perfluoroalkyl vinyl éthers (PAVE) dont le groupement alkyle possède de un à trois atomes de carbone, par exemple, le perfluorométhyl vinyl éther (PMVE), le perfluoroéthyl vinyl éther (PEVE) et le perfluoropropyl vinyl éther (PPVE). Ces monomères peuvent aussi être des perfluoroalkoxy alkyl vinyl éthers (PAAVE), décrits dans US 3.291.843 et dans la revue *Prog. Polym. Sci.,* 1989, 14, 251, tels que le perfluoro(2-n-propoxy)propyl vinyl éther, le perfluoro(2-méthoxy)propyl vinyl éther, le perfluoro(3-méthoxy)propyl vinyl éther, le perfluoro(2-méthoxy)éthyl vinyl éther, le perfluoro(3,6,9-trioxa-5,8-diméthyl)-dodeca-1-ène, le perfluoro(5-méthyl-3,6-dioxo)-1-nonène. De plus, des monomères perfluoroalkoxyalkyl vinyl éthers à extrémités carboxyliques ou à extrémité fluorure de sulfonyle, tel que le perfluoro(4-méthyl-3,6-dioxaoct-7-ène) fluorure de sulfonyle, peuvent aussi être utilisés pour la synthèse d'élastomères fluorés selon la présente invention. Des mélanges de PAVE et PAAVE peuvent être présents dans les copolymères.

Les solvants préférentiels pour effectuer la polymérisation en solution sont avantageusement des solvants conventionnels comprenant :

- les esters de formule R-COOR' où R et R' sont indépendamment un groupement $C_{1-5}$ alkyle, ou un groupement ester OR" où R" est un alkyle contenant de 1 à 5 atomes de carbone, R pouvant aussi représenter H. Préférentiellement, R = H ou $CH_3$ et R' = $CH_3$, $C_2H_5$, i-$C_3H_7$ ou t-$C_4H_9$.
- les solvants fluorés du type $ClCF_2CFCl_2$, le perfluoro-n-hexane (n-$C_6F_{14}$), n-$C_4F_{10}$, le perfluoro-2-butyl-tétrahydrofuranne (FC 75™); et
- les solvants usuels comme le 1,2-dichloroéthane, l'isopropanol, le tertiobutanol, l'acétonitrile et le butyronitrile.

Les solvants préférentiels sont l'acétate de méthyle, l'acétonitrile et le perfluoro-n-hexane dans des quantités variables comprises entre 30 et 60 % en poids.

La température de réaction pour la copolymérisation se situe préférablement entre 20 et 200 °C, plus avantageusement entre 55 et 140 °C, et mieux encore entre 55 et 80°C. La pression à l'intérieur de l'autoclave de polymérisation varie préférablement entre 2 et 100 bars, avantageusement entre 10 et 100 bars, plus précisément entre 20 et 35 bars, selon les conditions expérimentales.

Dans le procédé selon l'invention, la polymérisation peut être amorcée par des amorceurs usuels de la polymérisation radicalaire. Des exemples représentatifs de tels amorceurs sont les azoïques (tels que l'AIBN), les peroxydicarbonates de dialkyle, le peroxyde d'acétylcyclohexanesulfonyle, le peroxyde de dibenzoyle, les peroxydes d'alkyle, les hydroperoxydes d'alkyle, le peroxyde de dicumyle, les perbenzoates d'alkyle et les peroxypivalates d'alkyle. On donne néanmoins la préférence aux peroxydicarbonates de dialkyle, tels que les peroxydicarbonates de diéthyle et de di-isopropyle et aux peroxypivalates d'alkyle tels que les peroxypivalates de t-butyle et de t-amyle et, plus particulièrement encore, aux peroxypivalates d'alkyle ainsi que les peroxydes d'alkyle, dont le peroxyde de t-butyle et le 2,5-diméthyl-2,5-bis(t-butyl peroxy)hexane. De préférence, le rapport molaire initial entre l'amorceur et les monomères se situe entre 0,1 et 2%, mieux encore entre 0,3 et 2 %.

Pour le procédé de polymérisation en émulsion, une large gamme de cosolvants peut être envisagée, les solvants étant présents en diverses proportions dans le mélange avec l'eau, par exemple de 30 à 70 % en poids. De même, des tensioactifs anioniques, cationiques ou non ioniques peuvent être choisis parmi les sels d'ammonium et des sulfates perfluorés et peuvent être utilisés dans des quantités variant habituellement de 1 à 3 % en poids. Dans le procédé de polymérisation en émulsion ou en suspension, l'eau est généralement utilisée comme milieu réactionnel. Or, les monomères fluorés sont difficilement solubles dans l'eau, d'où la nécessité d'employer des tensioactifs. Par ailleurs, dans le procédé de polymérisation en émulsion ou en suspension, un cosolvant peut être ajouté pour augmenter la solubilité des comonomères fluorés. Dans ce dernier cas, l'acétonitrile, l'acétone ou d'autres alkyle alkyle cétones telle que la méthyl éthyl cétone peuvent, à titre d'exemple, être employés.

Alternativement, un procédé de polymérisation par microémulsion, tel que décrit dans EP 0 250 767 ou par dispersion, comme enseigné dans US 4.789717; EP 0 196 904; EP 0 280 312 et EP 0 360 292, peut être envisagé.

Des agents de transfert de chaîne peuvent être généralement utilisés pour diminuer les masses molaires des copolymères. Parmi ceux-là, on peut citer des télogènes contenant des atomes de brome ou d'iode terminaux tels que, par exemple, les composés de type $R_F X$ (où $R_F$ est un groupement perfluoré $R_F = C_n F_{2n+1}$, n = 1 - 10, X désignant un atome de brome ou d'iode). On peut trouver une liste exhaustive des divers agents de transfert utilisés en télomérisation de monomères fluorés dans la revue « Telomerization reactions of Fluoroalkanes », B. Améduri et B. Boutevin dans l'ouvrage « Topics in Current Chemistry » (Ed. R.D. Chambers), vol. 192 (1997) p. 165, Springer Verlag 1997.

Dans le cas où les élastomères de la présente invention contiendraient des atomes d'iode et/ou de brome en position terminale, ces élastomères pourraient être réticulés (ou vulcanisés) en utilisant des peroxydes. Des systèmes peroxydiques bien connus, par exemple ceux décrits dans EP 0 136 596, peuvent s'acquitter de cette tâche. La vulcanisation des élastomères peut être aussi réalisée par des méthodes ioniques conventionnelles telles que celles décrites dans US 3.876.654; US 4.259.463; EP 0 335 705 ou dans la revue *Prog. Polym. Sci.,* 1989, 14, 251; "Fluoroelastomers A. Van Cleeff, dans Modern Fluoropolymers, édité par John Scheirs. John Wiley & Sons, New York, 1997. pp. 597-614."

Toute la gamme de pourcentages relatifs des divers copolymères synthétisables à partir des monomères fluorés employés, conduisant à la formation des copolymères et des terpolymères fluorés a été étudiée.

L'analyse des élastomères de la présente invention par spectroscopie RMN du $^{19}$F et du $^1$H, le cas échéant, permet de connaître sans ambiguïté les pourcentages molaires des comonomères introduits dans les produits. Par exemple, dans le tableau 1 ci-dessous, les relations entre les signaux caractéristiques des copolymères VDF / $PFSO_2F$ en RMN du $^{19}$F et la structure des produits ont été établies.

Les pourcentages molaires de VDF dans les copolymères ont été déterminés à partir de l'équation 1.

Équation 1

$$\% \text{ molaire de VDF} = \frac{(I_{-83}+I_{-91}+I_{-95}+I_{-102}+I_{-108}+I_{-110}+I_{-113}+I_{-116})}{(I_{-83}+I_{-91}+I_{-95}+I_{-102}+I_{-108}+I_{-110}+I_{-113}+I_{-116})+(I_{-112})}$$

où $I_{-i}$ est la valeur de l'intégration du signal situé à -i ppm sur le spectre RMN du [19]F.

Tableau 1

| Caractérisation RMN du $^{19}$F des copolymères VDF / $PFSO_2F$ | |
| --- | --- |
| Structure | Déplacement chimique (ppm) |
| -$SO_2F$ | +45 |
| -OC$\underline{F}_2$CF(C$\underline{F}_3$)OC$\underline{F}_2$CF$_2$SO$_2$F | -77 à -80 |
| tBuO-C$\underline{F}_2$CH$_2$- | -83 |
| -CH$_2$C$\underline{F}_2$-CH$_2$C$\underline{F}_2$-CH$_2$CF$_2$- | -91 |
| -CH$_2$C$\underline{F}_2$-CH$_2$CF$_2$-CF$_2$CH$_2$- | -95 |
| tBuO-CH$_2$C$\underline{F}_2$-CH$_2$CF$_2$- | -102 |
| -CF$_2$CF(OR$_F$SO$_2$F)-CH$_2$C$\underline{F}_2$- | -108 |
| CF$_2$CF(OR$_F$SO$_2$F)- | -110 |

Tableau 1   (suite)

| Caractérisation RMN du $^{19}$F des copolymères VDF / PFSO$_2$F | |
|---|---|
| Structure | Déplacement chimique (ppm) |
| -CH$_2$C$\underline{F}_2$-CF$_2$CF(OR$_F$SO$_2$F)- | -112 |
| -OCF$_2$CF(CF$_3$)OCF$_2$C$\underline{F}_2$SO$_2$F | -113 |
| -CH$_2$CF$_2$-CH$_2$C$\underline{F}_2$-CF$_2$CH$_2$- | -116 |
| -CH$_2$CF$_2$-C$\underline{F}_2$CH$_2$-CH$_2$CF$_2$- | -122 |
| -CH$_2$CF$_2$-C$\underline{F}_2$CF(OR$_F$SO$_2$F)-CH$_2$CF$_2$- | -125 |
| -CH$_2$CF$_2$-CF$_2$C$\underline{F}$(OR$_F$SO$_2$F)-CH$_2$CF$_2$- | -127 |
| -CH$_2$CF$_2$-CF$_2$CF(OR$_F$SO$_2$F)-C$\underline{F}_2$CH$_2$- | -144 |
| -OCF$_2$C$\underline{F}$(CF$_3$)OC$_2$F$_4$SO$_2$F | |

L'analyse du tableau 1 ci-dessus met en évidence les enchaînements tête-queue et tête-tête des blocs d'unités VDF (respectivement à -91 et -113, -116 ppm) ainsi que des diades VDF / PFSO$_2$F.

Les copolymères de la présente invention peuvent trouver des applications dans la préparation de composantes de piles à combustible telles que les membranes, de joints toriques, de corps de pompe, de diaphragmes possédant une très bonne résistance aux carburants, essence, t-butyl méthyl éther, alcools et huile de moteur, combinées à de bonnes propriétés élastomères, en particulier une très bonne résistance aux basses températures compte tenu que les copolymères de la présente invention ont des T$_g$ variant de -30 à -40 °C. Ces copolymères présentent aussi l'avantage d'être réticulables en présence d'agents conventionnellement utilisés.

Le présent procédé comporte donc plusieurs avantages intéressants, à savoir :

- il est réalisé en mode de fonctionnement en cuvée ;
- il s'effectue en solution et utilise des solvants organiques classiques commercialement disponibles ;
- il comprend une polymérisation radicalaire en présence d'amorceurs classiques également disponibles commercialement ;
- le monomère qui entre majoritairement dans la composition des élastomères fluorés est le VDF, qui est nettement moins coûteux et beaucoup moins dangereux que le TFE.

Les exemples suivants sont donnés afin d'illustrer des mises en oeuvre préférentielles de l'invention.

Exemple 1

Copolymérisation VDF / PFSO$_2$F (pourcentages molaires initiaux 71,1 / 28,9)

Un tube de Carius en borosilicate et de forte épaisseur (longueur de 130 mm, diamètre intérieur de 10 mm, épaisseur de 2,5 mm, un volume total de 8 cm$^3$) contenant 0,0313 g (0,135 mmol) de peroxypivalate de t-butyle à 75%, 1,1881g (2,66 mmol) de perfluoro(4-méthyl-3,6-dioaoct-7-ène) fluorure de sulfonyle (PFSO$_2$F) et 1,9595 g (26,4 mmol) d'acétate de méthyle est connecté à un système de rampe à vide et purgé trois fois à l'hélium par des cycles vide primaire (100 mm Hg) / hélium. Puis, après au moins cinq cycles congélation / décongélation pour éliminer l'oxygène dissous dans cette solution, le fluorure de vinylidène (VDF) ($\Delta$P = 0,28 bar, 0,420 g, 0,007 mol) est piégé sous vide dans le tube gelé dans l'azote liquide, après détente des gaz situés dans un réservoir métallique étalonné en pression. Les quantités respectives de gaz (précision $\pm$ 8 mg) introduites dans le tube ont été déterminées par une chute relative de pression dans ce réservoir de détente, initialement rempli par un cylindre contenant 300 g de VDF. Préalablement, la courbe d'étalonnage "masse de VDF (en g) en fonction de la chute de pression (en bar)" a été déterminée. Par exemple, pour 0,750 g de VDF, une différence de pression de 0,50 bar était nécessaire. Le tube, sous vide et encore immergé dans l'azote liquide, est scellé au chalumeau puis placé dans la cavité d'un four agité à 75 °C pendant 6 heures afin de compléter la copolymérisation.

Après la copolymérisation, le tube est gelé à nouveau dans l'azote liquide puis connecté hermétiquement à une rampe à vide, et ouvert. Les gaz n'ayant pas réagi sont alors piégés dans un piège métallique préalablement taré et immergé dans l'azote liquide. 0,076 g de gaz n'ayant pas réagi a été piégé. Ceci permet de déduire le taux de conversion massique du VDF selon l'expression :

$$\frac{m_{VDF} - 0,076}{m_{VDF}} = 82\ \%$$

où $m_{VDF}$ représente la masse de VDF initialement introduite.

Puis, le liquide jaunâtre obtenu est additionné goutte à goutte dans 35 mL de pentane froid fortement agité. Après avoir été laissé 1 heure à 0-5°C, le mélange est versé dans une ampoule à décanter. Le surnageant limpide incolore est éliminé tandis que la phase lourde jaune est séchée à 70 °C sous 1 mm de Hg pendant 2 heures. 1,21 g d'un liquide très visqueux et limpide a été obtenu, correspondant à un rendement massique de 75 %. L'analyse en IRTF (IR Nicolet 510 P) de ce copolymère révèle les vibrations caractéristiques suivantes :

IRTF (KBr, cm$^{-1}$) : 1 100 - 1 300 ($\nu_{CF}$) ; 1 467 ($\nu_{SO2F}$).

La composition du copolymère, c'est-à-dire les pourcentages molaires des deux comonomères dans le copolymère, a été déterminée par RMN du $^{19}$F (200 ou 250 MHz) à température ambiante, l'acétone ou le DMF deutériés étant les solvants de référence. La référence en RMN du $^{19}$F est le CFCl$_3$. Les conditions expérimentales de la RMN étaient les suivantes : 30° de l'angle de « flip », 0,7 s de temps d'acquisition, 5 s de temps de « pulse », 128 « scans » d'accumulation et 5 μs de largeur de « pulse ».

Par ailleurs, cette analyse par RMN du $^{19}$F permet de s'assurer que le copolymère ne contient plus de PFSO$_2$F n'ayant pas réagi, comme le prouve l'absence du signal à -137,5 ppm caractéristique d'un des atomes de fluor éthyléniques du monomère sulfoné.

D'après les intégrations des signaux de la RMN correspondant à chaque comonomère, les pourcentages molaires respectifs VDF / PFSO$_2$F dans le copolymère sont 72,0/28,0. Le copolymère a l'aspect d'une résine incolore et présente une T$_g$ de -34,8 °C. L'analyse thermogravimétrique (ATG) révèle que le copolymère est très stable thermiquement. À cet égard, la température enregistrée pour une dégradation de 5 % sous air est de 295 °C.

Exemple 2

Copolymérisation VDF / PFSO$_2$F (pourcentages molaires initiaux 77,9 /22,1)

Dans un réacteur de 300 mL en Hastelloy (HC 276™), équipé d'une vanne d'introduction de gaz, d'une vanne de relargage, d'un manomètre, d'un disque de rupture en HC 276 et d'une agitation magnétique à 700 tours/min., sont introduits 47,0 g (0,105 mol) de PFSO$_2$F; 1,30 g (5,6 mmol) de peroxypivalate de t-butyle à 75 % et 95,20 g d'acétate de méthyle. Le réacteur est fermé et son étanchéité est vérifiée sous 20 bars d'azote. Le cycle suivant est effectué 3 fois : le réacteur est mis sous vide, puis on introduit de l'azote à 10-15 bars. Ces cycles permettent le dégazage de la solution. On effectue alors un vide de 20 mm de Hg dans le réacteur. Le réacteur est alors placé dans un bain acétone / azote liquide afin d'obtenir une température intérieure du réacteur proche de -80 °C. On introduit alors 23,8 g de fluorure de vinylidène (VDF) (0,372 mol) par double pesée du réacteur. Le réacteur est chauffé progressivement jusqu'à une température de 77 °C qui est maintenue durant 3 heures. La pression de réaction maximale atteinte est de 15 bars. La chute de pression observée à la température de réaction après 3 heures est de 10 bars. Après réaction, le réacteur est placé dans un bain de glace pendant 30 minutes, puis le dégazage montre une perte de 2,2 g de gaz n'ayant pas réagi, ce qui correspond à un taux de conversion des monomères gazeux d'environ 91 %. Le brut réactionnel est alors traité comme précédemment en précipitant dans le pentane froid, puis séché. La masse de copolymère récupérée est de 60,5 g. Le copolymère obtenu est une huile orangée visqueuse. Le rendement massique de 85 %. L'analyse en IRTF (IRNicolet 510 P) de ce copolymère révèle les vibrations caractéristiques suivantes :

IRTF (KBr, cm$^{-1}$): 1 100 - 1 300 ($\nu_{CF}$); 1 467 ($\nu_{SO2F}$).

La caractérisation par RMN du $^{19}$F (tableau 1) a permis de connaître les pourcentages molaires des deux comonomères dans le copolymère, qui sont de 78,3 % pour le VDF et 21,7 % pour le PFSO$_2$F. Le copolymère présente une Tg de -34.5 °C. L'analyse thermogravimétrique (ATG) révèle que le copolymère est très stable thermiquement. À cet égard, la température enregistrée pour une dégradation de 5 % sous air est de 340 °C.

D'autres copolymères ont été préparés selon le procédé susmentionné dans des conditions opératoires similaires, en variant les quantités de chacun des comonomères dans le mélange. Ces exemples de résultats de copolymérisation radicalaire supplémentaires (les exemples 3, 4 et 5), ainsi que les exemples 1 et 2 décrits précédemment, apparaissent dans le tableau 2 ci-dessous.

## Tableau 2

Conditions opératoires et résultats des copolymérisations radicalaires du VDF avec le PFSO$_2$F

| Exemple[a] | Masse VDF (g) | Masse PFSO$_2$F (g) | Masse Solvant (g) | C$_0$ (%) | VDF initial (% mol.) | PFSO$_2$F initial (% mol.) | VDF copo. (% mol.) | PFSO$_2$F copo. (% mol.) | Conversion de VDF (%) | Rendement massique (%) | T$_g$ (°C) | T$_{dég}$ 5% air (°C) |
|---|---|---|---|---|---|---|---|---|---|---|---|---|
| 1 | 0,420 | 1,1881 | 1,960[b] | 2,06 | 71,1 | 28,9 | 72,0 | 28,0 | 82 | 75 | -34,8 | 295 |
| 2 | 23,8 | 47,0 | 95,20[b] | 0,86 | 77,9 | 22,1 | 78,3 | 21,7 | 91 | 85 | -34,5 | 340 |
| 3 | 0,960 | 1,9603 | 2,121[b] | 2,04 | 77,3 | 22,7 | 77,7 | 22,3 | 96 | 63 | -32,3 | 345 |
| 4 | 1,145 | 2,0001 | 2,410[b] | 1,78 | 80,2 | 19,8 | 80,9 | 19,1 | 95 | 60 | -36,1 | 360 |
| 5 | 1,205 | 2,2105 | 2,052[c] | 0,40 | 78,6 | 21,4 | 81,0 | 19,0 | 55 | 49 | -32,8 | 385 |

[a]  Température de 75 °C, durée de 3 à 10 heures, en présence de peroxypivalate de t-butyle

[b]  Acétate de méthyle

[c]  Acétonitrile

C$_0$ = [amorceur]$_0$ / ([VDF]$_0$ + [PFSO$_2$F]$_0$). La valeur de C$_0$ varie généralement de 0,1 à 2 %.

**Revendications**

1. Élastomère fluoré sulfoné ne comprenant ni de tétrafluoroéthylène, ni de l'hexafluoropropène, ni de monomère porteur de groupement siloxane, et présentant des températures de transition vitreuse ($T_g$) comprises entre -30 et -40°C et comprenant un copolymère de fluorure de vinylidène (VDF) et de fluorure de perfluorosulfonyle éthoxy propyl vinyl éther (PSEPVE) ou de perfluoro(4-méthyl-3,6-dioxaoct-7-ène)fluorure de sulfonyle ($PFSO_2F$).

2. Élastomère fluoré sulfoné selon la revendication 1 contenant de 20 à 40 % en moles de PSEPVE ou de $PFSO_2F$ et de 80 à 60 % en mole de VDF.

3. Élastomère fluoré sulfoné selon la revendication 1, **caractérisé en ce que** le copolymère comprend aussi au moins un alcène fluoré et/ou un éther vinylique perfluoré.

4. Élastomère fluoré sulfoné selon la revendication 3, **caractérisé en ce que** l'alcène fluoré est choisi parmi le fluorure de vinyle, le trifluoroéthylène, le chlorotrifluoroéthylène, le bromotrifluoroéthylène, le 1-hydropentafluoropropylène, l'hexafluoroisobutylène, le 3,3,3-trifluoropropène, le 1,2-dichlorodifluoroéthylène et le 2-chloro-1,1-difluoroéthylène.

5. Élastomère fluoré sulfoné selon la revendication 3, **caractérisé en ce que** l'éther vinylique fluoré est choisi parmi un perfluoroalkyl vinyl éther, un perfluoroalkoxyalkyl vinyl éther et un mélange de ceux-ci.

6. Électrolytes polymères, ionomères, composantes de piles à combustible (telles que les membranes et les joints d'étanchéité), joints, durites, tuyaux, joints toriques, corps de pompe, diaphragmes, têtes de piston trouvant des applications dans les industries aéronautique, pétrolière, automobile, minière, nucléaire et pour la plasturgie comprenant des élastomères selon l'une quelconque des revendications 1 à 5.

7. Procédé de préparation d'élastomères fluorés par copolymérisation de fluorure de vinylidène (VDF) avec le fluorure de perfluorosulfonyle éthoxy propyl vinyl éther (PSEPVE) ou le perfluoro(4-méthyl-3,6-dioxaoct-7-ène) fluorure de sulfonyle ($PFSO_2F$) **caractérisé en ce que** la préparation s'effectue par copolymérisation radicalaire en présence d'un amorceur organique à une température comprise entre 20 et 200 °C, pour une période comprise entre 2 et 6 heures, et à une pression initiale comprise entre 2 et 100 bars, et on laisse chuter ladite pression initiale au fur et à mesure que les monomères se consomment.

8. Procédé selon la revendication 7, **caractérisé en ce que** l'on utilise le fluorure de vinylidène à raison de 60 à 80 % en moles, la balance étant constituée par le fluorure de perfluorosulfonyle éthoxy propyl vinyl éther ou le perfluoro (4-méthyl-3,6-dioxaoct-7-ène) fluorure de sulfonyle, et éventuellement au moins un alcène fluoré et/ou un éther vinylique perfluoré.

9. Procédé selon la revendication 8, **caractérisé en ce que** l'on utilise l'éther vinylique perfluoré à raison de 3 à 50 % en moles.

10. Procédé selon la revendication 8, **caractérisé en ce que** l'éther vinylique perfluoré est un perfluoroalkyl vinyl éther choisi parmi le perfluorométhyl vinyl éther, le perfluoroéthyl vinyl éther et le perfluoropropyl vinyl éther.

11. Procédé selon la revendication 8, **caractérisé en ce que** l'éther vinylique perfluoré est le perfluométhyl vinyl éther ou le perfluoropropyl vinyl éther.

12. Procédé selon la revendication 7, **caractérisé en ce que** l'éther vinylique est un perfluoroalkoxyalkyl vinyl éther choisi parmi le perfluoro(2-n-propoxy)propyl vinyl éther, le perfluoro(2-méthoxy)propyl vinyl éther, le perfluoro (3-méthoxy)propyl vinyl éther, le perfluoro(2-méthoxy)éthyl vinyl éther, le perfluoro(3,6,9-trioxa-5,8-diméthyl)-dodeca-1-ène, le perfluoro(5-méthyl-3,6-dioxo)-1-nonène, seuls ou en mélange.

13. Procédé selon la revendication 7, **caractérisé en ce que** la copolymérisation radicalaire s'effectue en solution en présence d'un solvant.

14. Procédé selon la revendication 7, **caractérisé en ce que** le solvant est choisi parmi :

    - les esters de formule R-COOR' où R et R' représentent indépendamment $C_{1-5}$ alkyle ou un groupement OR" où R" représente un groupement alkyle contenant de 1 à 5 atomes de carbone, R pouvant aussi représenter H,
- les solvants fluorés dont le perfluoro-n-hexane,
- les solvants usuels choisis parmi l'acétate de méthyle, le 1,2-dichloroéthane, l'isopropanol, le tertiobutanol, l'acétonitrile et le butyronitrile.

15. Procédé selon la revendication 14, **caractérisé en ce que** R = H ou $CH_3$ et R' = $CH_3$, $C_2H_5$, i-$C_3H_7$ ou t-$C_4H_9$.

16. Procédé selon la revendication 14, **caractérisé en ce que** le solvant est un solvant fluoré choisi parmi $ClCF_2CFCl_2$, n-$C_6F_{14}$, n-$C_4F_{10}$ et le perfluoro-2-butyl-tétrahydro-furanne.

17. Procédé selon la revendication 14, **caractérisé en ce que** le solvant est choisi parmi l'acétate de méthyle et l'acétonitrile.

18. Procédé selon la revendication 7, **caractérisé en ce que** la température se situe entre 55 et 80 °C.

19. Procédé selon la revendication 7, **caractérisé en ce que** la pression initiale est de l'ordre de 10 à 100 bars.

20. Procédé selon la revendication 7, **caractérisé en ce que** la pression initiale se situe entre 20 et 40 bars.

21. Procédé selon la revendication 7, **caractérisé en ce que** la copolymérisation radicalaire s'effectue par polymérisation en émulsion, en miniémulsion, en microémulsion, en masse, en suspension, en microsuspension ou en solution.

22. Procédé selon la revendication 8, **caractérisé en ce que** l'on effectue la copolymérisation de fluorure de vinylidène, avec le PSEPVE ou le PFSO$_2$F, au moins un éther vinylique perfluoré et au moins un alcène fluoré, l'alcène fluoré est un composé de structure $R_1R_2C=CR_3R_4$ où $R_1$, $R_2$, $R_3$ et $R_4$ sont tels qu'au moins un d'entre eux est fluoré ou perfluoré.

23. Procédé selon la revendication 22, **caractérisé en ce que** l'alcène fluoré est choisi parmi le fluorure de vinyle, le trifluoroéthylène, le chlorotrifluoroéthylène, le bromotrifluoroéthylène, le 1-hydropentafluoropropylène, l'hexafluoroisobutylène, le 3,3,3-trifluoropropène, le 1,2-dichlorodifluoroéthylène et le 2-chloro-1,1-difluoroéthylène.

24. Procédé selon la revendication 7 **caractérisé en ce que** l'on effectue la copolymérisation en cuvée.

25. Procédé selon la revendication 7 **caractérisé en ce que** l'amorceur organique est choisi parmi les composés azoïques, les peroxydicarbonates de dialkyle, les peroxydes d'alkyle, les hydroperoxydes d'alkyle, les perbenzoates d'alkyle et les peroxypivalates d'alkyle.

26. Procédé selon la revendication 7 **caractérisé en ce que** l'amorceur organique est choisi parmi le peroxyde d'acétylcyclohexanesulfonyle, le peroxyde de dibenzoyle, le peroxyde de dicumyle, le peroxydicarbonate de diéthyle, le peroxydicarbonate de di-isopropyle, le peroxypivalate de t-butyle, le peroxypivalate de t-amyl et le t-butyl cyclohexyl peroxydicarbonate.

27. Procédé selon la revendication 7 **caractérisé en ce que** le rapport molaire initial entre l'amorceur et les monomères se situe entre 0,1 et 2 %.

28. Procédé selon la revendication 7, **caractérisé en ce que** la copolymérisation s'effectue en émulsion.

29. Procédé selon la revendication 28, **caractérisé en ce que** la copolymérisation s'effectue en présence d'un agent tensioactif dans des quantités variant habituellement de 1 à 3 % en poids.

30. Procédé selon la revendication 29, **caractérisé en ce que** l'agent tensioactif est anionique, cationique ou non ionique.

31. Procédé selon la revendication 30, **caractérisé en ce que** l'agent tensioactif est choisi parmi les sels d'ammonium et des sulfonates perfluorés.

32. Procédé selon la revendication 7, **caractérisé en ce que** la copolymérisation s'effectue en présence d'agents de transfert de chaîne.

## Claims

1. Sulphonated fluoroelastomer, comprising neither tetrafluoroethylene nor hexafluoropropene nor a monomer carrying a siloxane group and exhibiting a glass transition temperature ($T_g$) of between -30 and -40°C and comprising a copolymer of vinylidene fluoride (VDF) and of perfluoro(fluorosulphonylethoxy)propyl vinyl ether (PSEPVE) or of perfluoro(4-methyl-3,6-dioxaoct-7-ene) sulphonyl fluoride ($PFSO_2F$).

2. Sulphonated fluoroelastomer according to Claim 1, comprising from 20 to 40 mol% of PSEPVE or of $PFSO_2F$ and from 80 to 60 mol% of VDF.

3. Sulphonated fluoroelastomer according to Claim 1, **characterized in that** the copolymer also comprises at least one fluoroalkene and/or one perfluorovinyl ether.

4. Sulphonated fluoroelastomer according to Claim 3, **characterized in that** the fluoroalkene is chosen from vinyl fluoride, trifluoroethylene, chlorotrifluoroethylene, bromotrifluoroethylene, 1-hydropentafluoropropylene, hexafluoroisobutylene, 3,3,3-trifluoropropene, 1,2-dichlorodifluoroethylene and 2-chloro-1,1-difluoroethylene.

5. Sulphonated fluoroelastomer according to Claim 3, **characterized in that** the perfluorovinyl ether is chosen from a perfluoroalkyl vinyl ether, a perfluoroalkoxyalkyl vinyl ether and a mixture of these.

6. Polymer electrolytes, ionomers, fuel cell components (such as membranes and leaktight seals), seals, hoses, pipes, O-rings, pump bodies, diaphragms or piston heads for applications in the aeronautical, oil, motor vehicle, mining or nuclear industries and for plastics technology, comprising elastomers according to any one of Claims 1 to 5.

7. Process for the preparation of fluoroelastomers by copolymerization of vinylidene fluoride (VDF) with perfluoro (fluorosulphonylethoxy)propyl vinyl ether (PSEPVE) or perfluoro(4-methyl-3,6-dioxaoct-7-ene)sulphonyl fluoride ($PFSO_2F$), **characterized in that** the preparation is carried out by radical copolymerization in the presence of an organic initiator at a temperature of between 20 and 200°C for a period of time of between 2 and 6 hours and at an initial pressure of between 2 and 100 bar, and the said initial pressure is allowed to fall as the monomers are consumed.

8. Process according to Claim 7, **characterized in that** the vinylidene fluoride is used in a proportion of 60 to 80 mol%, the balance being composed of perfluoro(fluorosulphonylethoxy) propyl vinyl ether or perfluoro(4-methyl-3,6-dioxaoct-7-ene)sulphonyl fluoride and optionally at least one fluoroalkene and/or one perfluorovinyl ether.

9. Process according to Claim 8, **characterized in that** the perfluorovinyl ether is used in a proportion of 3 to 50 mol%.

10. Process according to Claim 8, **characterized in that** the perfluorovinyl ether is a perfluoroalkyl vinyl ether chosen from perfluoromethyl vinyl ether, perfluoroethyl vinyl ether and perfluoropropyl vinyl ether.

11. Process according to Claim 8, **characterized in that** the perfluorovinyl ether is perfluoromethyl vinyl ether or perfluoropropyl vinyl ether.

12. Process according to Claim 7 **characterized in that** the vinyl ether is a perfluoroalkoxyalkyl vinyl ether chosen from perfluoro (2-(n-propoxy)propyl) vinyl ether, perfluoro(2-methoxypropyl) vinyl ether, perfluoro(3-methoxypropyl) vinyl ether, perfluoro(2-methoxyethyl) vinyl ether, perfluoro (3,6,9-trioxa-5,8-dimethyldodec-1-ene) or perfluoro (5-methyl-3,6-dioxa-1-nonene), alone or as a mixture.

13. Process according to Claim 7, **characterized in that** the radical copolymerization is carried out in solution in the presence of a solvent.

14. Process according to Claim 7 **characterized in that** the solvent is chosen from:

   - esters of formula R-COOR' where R and R' independently represent $C_{1-5}$ alkyl or an OR" group where R" represents an alkyl group comprising from 1 to 5 carbon atoms, it also being possible for R to represent H,
- fluorinated solvents, including perfluoro-n-hexane,
- conventional solvents chosen from methyl acetate, 1,2-dichloroethane, isopropanol, tert-butanol, acetonitrile and butyronitrile.

15. Process according to Claim 14 **characterized in that** R = H or $CH_3$ and R' = $CH_3$, $C_2H_5$, i-$C_3H_7$ or t-$C_4H_9$.

16. Process according to Claim 14 **characterized in that** the solvent is a fluorinated solvent chosen from $ClCF_2CFCl_2$, n-$C_6F_{14}$, n-$C_4F_{10}$ and perfluoro-2-butyltetrahydrofuran.

17. Process according to Claim 14 **characterized in that** the solvent is chosen from methyl acetate and acetonitrile.

18. Process according to Claim 7, **characterized in that** the temperature lies between 55 and 80°C.

19. Process according to Claim 7, **characterized in that** the initial pressure is of the order of 10 to 100 bar.

20. Process according to Claim 7, **characterized in that** the initial pressure lies between 20 and 40 bar.

21. Process according to Claim 7, **characterized in that** the radical copolymerization is carried out by emulsion, miniemulsion, microemulsion, bulk, suspension, microsuspension or solution polymerization.

22. Process according to Claim 8, **characterized in that** the copolymerization of vinylidene fluoride with PSEPVE or $PFSO_2F$, at least one perfluorovinyl ether and at least one fluoroalkene is carried out, the fluoroalkene being a compound with the structure $R_1R_2C=CR_3R_4$ where $R_1$, $R_2$, $R_3$ and $R_4$ are such that at least one of them is fluorinated or perfluorinated.

23. Process according to Claim 22, **characterized in that** the fluoroalkene is chosen from vinyl fluoride, trifluoroethylene, chlorotrifluoroethylene, bromotrifluoroethylene, 1-hydropentafluoropropylene, hexafluoroisobutylene, 3,3,3-trifluoropropene, 1,2-dichlorodifluoroethylene and 2-chloro-1,1-difluoroethylene.

24. Process according to Claim 7, **characterized in that** the copolymerization is carried out batchwise.

25. Process according to Claim 7, **characterized in that** the organic initiator is chosen from azo compounds, dialkyl peroxydicarbonates, alkyl peroxides, alkyl hydroperoxides, alkyl perbenzoates and alkyl peroxypivalates.

26. Process according to Claim 7, **characterized in that** the organic initiator is chosen from acetylcyclohexylsulphonyl peroxide, dibenzoyl peroxide, dicumyl peroxide, diethyl peroxydicarbonate, diisopropyl peroxydicarbonate, t-butyl peroxypivalate, t-amyl peroxypivalate and t-butyl cyclohexyl peroxydicarbonate.

27. Process according to Claim 7, **characterized in that** the initial molar ratio of the initiator to the monomers lies between 0.1 and 2%.

28. Process according to Claim 7, **characterized in that** the copolymerization is carried out as an emulsion copolymerization.

29. Process according to Claim 28, **characterized in that** the copolymerization is carried out in the presence of a surface-active agent in amounts usually varying from 1 to 3% by weight.

30. Process according to Claim 29, **characterized in that** the surface-active agent is anionic, cationic or nonionic.

31. Process according to Claim 30, **characterized in that** the surface-active agent is chosen from salts of ammonium and perfluorosulphonates.

32. Process according to Claim 7, **characterized in that** the copolymerization is carried out in the presence of chain-transfer agents.

**Patentansprüche**

1. Fluoriertes sulfoniertes Elastomer, das weder Tetrafluorethylen, noch Hexafluorpropen, noch ein Monomer, das eine Siloxangruppe trägt, umfasst und Glasübergangstemperaturen ($T_g$) zwischen -30 und -40°C aufweist und ein Copolymer von Vinylidenfluorid (VDF) und Perfluorsulfonylfluoridethoxypropylvinylether (PSEPVE) oder Perfluor-(4-methyl-3,6-dioxaoct-7-en)sulfonylfluorid (PFSO$_2$F) umfasst.

2. Fluoriertes sulfoniertes Elastomer nach Anspruch 1, das 20 bis 40 Mol-% PSEPVE oder PFSO$_2$F und 80 bis 60 Mol-% VDF enthält.

3. Fluoriertes sulfoniertes Elastomer nach Anspruch 1, **dadurch gekennzeichnet, dass** das Copolymer ferner mindestens ein fluoriertes Alken und/oder einen perfluorierten Vinylether umfasst.

4. Fluoriertes sulfoniertes Elastomer nach Anspruch 3, **dadurch gekennzeichnet, dass** das fluorierte Alken aus Vinylfluorid, Trifluorethylen, Chlortrifluorethylen, Bromtrifluorethylen, 1-Hydropentafluorpropylen, Hexafluorisobutylen, 3,3,3-Trifluorpropen, 1,2-Dichlordifluorethylen und 2-Chlor-1,1-difluorethylen ausgewählt ist.

5. Fluoriertes sulfoniertes Elastomer nach Anspruch 3, **dadurch gekennzeichnet, dass** der fluorierte Vinylether aus einem Perfluoralkylvinylether, einem Perfluoralkoxyalkylvinylether und aus deren Gemisch ausgewählt ist.

6. Polymere Elektrolyten, Ionomere, Komponenten von Brennstoffzellen (wie die Membranen und Dichtungen), Verbindungen, biegsame Rohrleitungen, Rohre, Ringdichtungen, Pumpenkörper, Scheidewände, Kolbenköpfe, die in der Aeronautik-, Erdöl-, Automobil-, Bergbau-, Nuklearindustrie und für die Kunststofftechnologie Anwendung finden, umfassend Elastomere nach einem der Ansprüche 1 bis 5.

7. Verfahren zur Herstellung fluorierter Elastomere durch Copolymerisation von Vinylidenfluorid (VDF) mit Perfluorsulfonylfluoridethoxypropylvinylether (PSEPVE) oder Perfluor-(4-methyl-3,6-dioxaoct-7-en)sulfonylfluorid (PFSO$_2$F), **dadurch gekennzeichnet, dass** die Herstellung durch Radikalcopolymerisation in Gegenwart eines organischen Starters und bei einer Temperatur zwischen 20 und 200°C für einen Zeitraum zwischen 2 und 6 Stunden bei einem Anfangsdruck zwischen 2 und 100 bar erfolgt, und dass man den Anfangsdruck in dem Maße abfallen lässt, wie die Monomere verbraucht werden.

8. Verfahren nach Anspruch 7, **dadurch gekennzeichnet, dass** Vinylidenfluorid in einem Anteil von 60 bis 80 Mol-% eingesetzt wird, wobei der Rest aus Perfluorsulfonylfluoridethoxypropylvinylether oder Perfluor-(4-methyl-3,6-dioxaoct-7-en)sulfonylfluorid und gegebenenfalls mindestens einem fluorierten Alken und/oder einem perfluorierten Vinylether besteht.

9. Verfahren nach Anspruch 8, **dadurch gekennzeichnet, dass** der perfluorierte Vinylether in einem Anteil von 3 bis 50 Mol-% verwendet wird.

10. Verfahren nach Anspruch 8, **dadurch gekennzeichnet, dass** der perfluorierte Vinylether ein Perfluoralkylvinylether ist, der aus Perfluormethylvinylether, Perfluorethylvinylether und Perfluorpropylvinylether ausgewählt ist.

11. Verfahren nach Anspruch 8, **dadurch gekennzeichnet, dass** es sich bei dem perfluorierten Vinylether um Perfluormethylvinylether oder Perfluorpropylvinylether handelt.

12. Verfahren nach Anspruch 7, **dadurch gekennzeichnet, dass** der Vinylether ein Perfluoralkoxyalkylvinylether ist, der aus Perfluor-(2-npropoxy)propylvinylether, Perfluor-(2-methoxy)propylvinylether, Perfluor-(3-methoxy)propylvinylether, Perfluor-(2-methoxy)ethylvinylether, Perfluor-(3,6,9-trioxa-5,8-dimethyl)dodeca-1-en, Perfluor-(5-methyl-3,6-dioxo)-1-nonen, allein oder im Gemisch, ausgewählt ist.

13. Verfahren nach Anspruch 7, **dadurch gekennzeichnet, dass** die Radikalcopolymerisation in Lösung in Gegenwart eines Lösungsmittels erfolgt.

14. Verfahren nach Anspruch 7, **dadurch gekennzeichnet, dass** das Lösungsmittel aus folgenden ausgewählt ist:

   - den Estern der Formel R-COOR', wobei R und R' unabhängig für C$_{1-5}$-Alkyl oder einen Rest OR'' stehen, wobei R'' für einen Alkylrest mit 1 bis 5 Kohlenstoffatomen steht und R auch für H stehen kann,

- fluorierte Lösungsmittel, darunter Perfluor-n-hexan,
- die üblichen Lösungsmittel, ausgewählt aus Methylacetat, 1,2-Dichlorethan, Isopropanol, tert.-Butanol, Acetonitril und Butyronitril.

15. Verfahren nach Anspruch 14, **dadurch gekennzeichnet, dass** R = H oder $CH_3$ und R' = $CH_3$, $C_2H_5$, i-$C_3H_7$ oder t-$C_4H_9$.

16. Verfahren nach Anspruch 14, **dadurch gekennzeichnet, dass** das Lösungsmittel ein fluoriertes Lösungsmittel ist, das aus $ClCF_2CFCl_2$, n-$C_6F_{14}$, n-$C_4F_{10}$ und Perfluor-2-butyltetrahydrofuran ausgewählt ist.

17. Verfahren nach Anspruch 14, **dadurch gekennzeichnet, dass** das Lösungsmittel aus Methylacetat und Acetonitril ausgewählt ist.

18. Verfahren nach Anspruch 7, **dadurch gekennzeichnet, dass** die Temperatur zwischen 55 und 80°C beträgt.

19. Verfahren nach Anspruch 7, **dadurch gekennzeichnet, dass** der Anfangsdruck in der Größenordnung von 10 bis 100 bar liegt.

20. Verfahren nach Anspruch 7, **dadurch gekennzeichnet, dass** der Anfangsdruck zwischen 20 und 40 bar liegt.

21. Verfahren nach Anspruch 7, **dadurch gekennzeichnet, dass** die Radikalcopolymerisation durch Emulsions-, Miniemulsions-, Mikroemulsions-, Massen-, Suspensions-, Mikrosuspensions- oder Lösungspolymerisation erfolgt.

22. Verfahren nach Anspruch 8, **dadurch gekennzeichnet, dass** die Copolymerisation von Vinylidenfluorid mit PSEP-VE oder $PFSO_2F$, mindestens einem perfluorierten Vinylether und mindestens einem fluorierten Alken erfolgt, das eine Verbindung der Struktur $R_1R_2C=CR_3R_4$ ist, wobei $R_1$, $R_2$, $R_3$ und $R_4$ derart sind, dass mindestens eines unter ihnen fluoriert oder perfluoriert ist.

23. Verfahren nach Anspruch 22, **dadurch gekennzeichnet, dass** das fluorierte Alken aus Vinylfluorid, Trifluorethylen, Chlortrifluorethylen, Bromtrifluorethylen, 1-Hydropentafluorpropylen, Hexafluorisobutylen, 3,3,3-Trifluorpropen, 1,2-Dichlordifluorethylen und 2-Chlor-1,1-difluorethylen ausgewählt ist.

24. Verfahren nach Anspruch 7, **dadurch gekennzeichnet, dass** die Copolymerisation in einem Gefäß erfolgt.

25. Verfahren nach Anspruch 7, **dadurch gekennzeichnet, dass** der organische Starter aus Azoverbindungen, Dialkylperoxydicarbonaten, Alkyperoxiden, Alkylhydroperoxiden, Alkylperbenzoaten und Alkylperoxypivalaten ausgewählt ist.

26. Verfahren nach Anspruch 7, **dadurch gekennzeichnet, dass** der organische Starter aus Acetylcyclohexansulfonylperoxid, Dibenzoylperoxid, Dicumylperoxid, Diethylperoxydicarbonat, Diisopropylperoxydicarbonat, t-Butylperoxypivalat, t-Amylperoxypivalat und t-Butylcyclohexylperoxydicarbonat ausgewählt ist.

27. Verfahren nach Anspruch 7, **dadurch gekennzeichnet, dass** das anfängliche Molverhältnis zwischen dem Starter und den Monomeren zwischen 0,1 und 2% beträgt.

28. Verfahren nach Anspruch 7, **dadurch gekennzeichnet, dass** die Copolymerisation in Emulsion erfolgt.

29. Verfahren nach Anspruch 28, **dadurch gekennzeichnet, dass** die Copolymerisation in Gegenwart eines Tensids in Mengen, die gewöhnlich von 1 bis 3 Gew.-% variieren, erfolgt.

30. Verfahren nach Anspruch 29, **dadurch gekennzeichnet, dass** das Tensid anionisch, kationisch oder nichtionisch ist.

31. Verfahren nach Anspruch 30, **dadurch gekennzeichnet, dass** das Tensid aus Ammoniumsalzen und perlfuorierten Sulfonaten ausgewählt ist.

32. Verfahren nach Anspruch 7, **dadurch gekennzeichnet, dass** die Copolymerisation in Gegenwart von Kettenübertragungsmitteln erfolgt.